(19) **Europäisches Patentamt**
**European Patent Office**
**Office européen des brevets**

(11) **EP 3 723 487 B1**

(12) **EUROPEAN PATENT SPECIFICATION**

(45) Date of publication and mention of the grant of the patent:
**28.06.2023 Bulletin 2023/26**

(21) Application number: **18839924.0**

(22) Date of filing: **07.12.2018**

(51) International Patent Classification (IPC):
**A01N 59/00** (2006.01)  **C02F 1/50** (2023.01)
**A01P 1/00** (2006.01)

(52) Cooperative Patent Classification (CPC):
**A01N 59/00**

(86) International application number:
**PCT/NL2018/050820**

(87) International publication number:
**WO 2019/117710 (20.06.2019 Gazette 2019/25)**

(54) **REDUCTION OF AMMONIA EMISSION FROM AREAS WHERE ANIMALS ARE MAINTAINED**

VERMINDERUNG DER AMMONIAK-EMISSION AUS BEREICHEN IN DEN TIERE GEHALTEN WERDEN

RÉDUCTION DES ÉMISSIONS D'AMMONIAQUE PROVENANT DE ZONES OÙ DES ANIMAUX SONT ENTRETENUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2017 NL 2020096**

(43) Date of publication of application:
**21.10.2020 Bulletin 2020/43**

(73) Proprietor: **Stichting Wageningen Research**
**6708 PB Wageningen (NL)**

(72) Inventors:
• **AARNINK, Andreas Johannes Antonius**
**6674 BG Herveld (NL)**
• **PUENTE RODRIGUEZ, Daniel**
**6721 AK Bennekom (NL)**

(74) Representative: **EP&C**
**P.O. Box 3241**
**2280 GE Rijswijk (NL)**

(56) References cited:
EP-A1- 0 370 565      EP-A1- 0 408 199
EP-A1- 2 183 965      EP-A1- 2 236 024
EP-A1- 3 047 729      WO-A1-97/42984
DE-A1- 4 328 372      DE-A1- 10 118 322
US-A- 3 966 450

• .: "Cleaning and Disinfection of a Vacated Stall", , 3 May 2016 (2016-05-03), pages 1-1, XP055450861, U.S.A. Retrieved from the Internet: URL:https://www.cdfa.ca.gov/ahfss/Animal_H ealth/pdfs/D.pdf [retrieved on 2018-02-13]
• .: "HYDROGEN PEROXIDE ON THE DAIRY FARM", , 20 December 2010 (2010-12-20), pages 1-1, XP055450867, Australia Retrieved from the Internet: URL:http://agriculturalsolutions.com.au/do wnload.php?type=pdf&file=38 [retrieved on 2018-02-13]
• Degussa: "Peraclean 5% (Peroxyacetic Acid Solution) - Approved Label", , 6 July 2004 (2004-07-06), pages 1-7, XP055450871, U.S.A. Retrieved from the Internet: URL:https://www3.epa.gov/pesticides/chem_s earch/ppls/054289-00003-20040706.pdf [retrieved on 2018-02-13]
• S. K. XUE ET AL: "SURFACE OXIDATION FOR REDUCING AMMONIA AND HYDROGEN SULFIDE EMISSIONS FROM DAIRY MANURE STORAGE", TRANSACTIONS OF THE AMERICAN SOCIETY OF AGRICULTURAL ENGINEERS., vol. 42, no. 5, 1 September 1999 (1999-09-01), pages 1401-1408, XP055450411, US ISSN: 2151-0032, DOI: 10.13031/2013.13303

- David B Parker ET AL: "Urease Inhibitor for Reducing Ammonia Emissions from an Open-Lot Beef Cattle Feedyard in the Texas High Plains", Applied Engineering in Agriculture, 1 December 2016 (2016-12-01), pages 823-832, XP055450444, Retrieved from the Internet: URL:https://lib.dr.iastate.edu/cgi/viewcontent.cgi?referer=https://www.google.de&httpsredir=1&article=2081&context=abe_eng_pubs [retrieved on 2018-02-12]
- KRAJEWSKA ET AL: "Hydrogen peroxide-induced inactivation of urease: Mechanism, kinetics and inhibitory potency", JOURNAL OF MOLECULAR CATALYSIS. B, ENZYMATIC, ELSEVIER, AMSTERDAM, NL, vol. 68, no. 3-4, 1 March 2011 (2011-03-01), pages 262-269, XP027596862, ISSN: 1381-1177, DOI: 10.1016/J.MOLCATB.2010.11.015 [retrieved on 2011-01-11]
- SIMOES M ET AL: "A review of current and emergent biofilm control strategies", LWT-FOOD SCIENCE AND TECHNOLOGY, ACADEMIC PRESS, UNITED KINGDOM, vol. 43, no. 4, 1 May 2010 (2010-05-01), pages 573-583, XP026873687, ISSN: 0023-6438 [retrieved on 2010-01-04]
- M. MORADI ET AL: "Biofilm removal potential of neutral electrolysed water on pathogen and spoilage bacteria in dairy model systems", JOURNAL OF APPLIED MICROBIOLOGY., vol. 123, no. 6, 2 November 2017 (2017-11-02), pages 1429-1437, XP055451051, GB ISSN: 1364-5072, DOI: 10.1111/jam.13608
- Hao X.X. ET AL: "Disinfection effectiveness of slightly acidic electrolysed water in swine barns", Journal of Applied Microbiology, vol. 115, no. 3, 27 June 2013 (2013-06-27), pages 703-710, XP55834561, GB ISSN: 1364-5072, DOI: 10.1111/jam.12274 Retrieved from the Internet: URL:https://api.wiley.com/onlinelibrary/tdm/v1/articles/10.1111%2Fjam.12274>

Remarks:
    The file contains technical information submitted after the application was filed and not included in this specification

## Description

### Technical field

The present invention relates to a method to reduce ammonia emission from areas in which animals are maintained, e.g. livestock production systems or livestock houses.

### Background of the invention

Ammonia emission from livestock houses should be reduced as much as possible in order to protect the environment. Ammonia in cattle and pig barns is mainly formed by the conversion of urea in urine to ammonia.

This conversion process is catalysed by the enzyme urease. Without urease this reaction will not or will hardly take place. Urea constitutes more than 90% of total nitrogen in urine of pigs (Canh et al., 1997 J. Anim. Sci. 75: 700-706). In dairy cattle this seems to be even more than 95% (Dijkstra et al., 2013 Animal 7(s2), 292-302). Urease is a very common enzyme that can be found in the environment.

On a floor with frequent addition of faeces and urine, urease activity (concentration) is gradually increasing to a certain maximum level (Elzing & Swierstra, 1993 Rapport 93-2 IMAG-DLO, Wageningen). The rate of conversion of urea to ammonium is a measure of urease activity (Braam & Swierstra, 1999 J. Agric. Engng Res 72: 59-69). Urease activity is influenced by many factors (Snoek, 2016, PhD thesis Wageningen University, the Netherlands pp 182), such as the temperature and pH of the urine and the amount of urease in the liquid or on the floor. Limiting urease activity can lead to a significant reduction in ammonia emission.

EP 0 408 199 discloses the use of a (thio)phosphoric acid diamide ester-based urease inhibitor to reduce ammonia emission in animal barns.

Parker et al (Applied Engineering in Agriculture, 1 December 2016 (2016-12-01), pages 823-832) disclose the use of N-(n-butyl) thiophosphoric triamide for reducing ammonia emissions from the surface of a beef cattle feedyard.

Krajewska et al (JOURNAL OF MOLECULAR CATALYSIS. B, ENZYMATIC, ELSEVIER, AMSTERDAM, NL, vol. 68, no. 3-4, 1 March 2011) disclose that the one catalytic function exerted by ureases is the hydrolysis of urea resulting in the liberation of ammonia Hao et al (Journal of Applied Microbiology, vol. 115, no. 3, 27 June 2013) disclose the use of electrolysed oxidising water for disinfecting a swine barn.

There are different methods for lowering the level of ammonia in animal areas. Urease activity can be inhibited by directly interfering with the enzyme by means of urease inhibitors (Hagenkamp-Korth, Ohl, & Hartung, 2015, Biomass and Energy, 75; 75-82). In this way a limited reduction of ammonia emission can be expected. However, in experiments that have been conducted so far, one application of urease inhibitors per day (during the morning milking) is recommended (see, e.g., Hagenkamp-Korth, Haeussermann & Hartung 2015 Agriculture, Ecosystems and Environment 202; 168-177). This means that new faeces and urine will be excreted during the day and new urease and ureum will be produced. Moreover, after just a few minutes, the ammonium level will again rise and lead to ammonia emissions. In addition, urease inhibitors may break down and are easily flushed away with newly excreted urine.

Another possible method to prevent ammonia production is to spray the floor in livestock houses with water and a formaldehyde solution, *i.e.* formalin, see Ogink and Kroodsma (1996, Journal of agricultural engineering research 63(3), 197-2014). These authors found a 50% reduction of the ammonia emission by regularly spraying (*i.e.*, every 2 hours). The problem of this method is that the fixed spraying system requires relatively high volumes of water and formalin. Furthermore, application of formalin produces harmful gases that may affect animal and human health.

It is an objective of the present invention to provide for an improved and safe method to reduce ammonia emission from livestock houses.

### Summary of the invention

The invention is as set out in the claims.

The present inventors found that urease activity on a (slatted, grooved or other type of) floor in cattle, sheep and/or pig houses can be reduced to a stable low level for at least 2 or even at least 3, 4, or 5 days by application of an oxidizing biocide treatment.

In particular, the present inventors realized that a prolonged reduction of urease activity can be achieved by killing or inactivating the bacteria that produce the urease enzyme. On a floor where faeces and urine are regularly dropped, a biofilm will develop with bacteria that can produce urease. As indicated above, this will lead to a gradual build-up of urease activity after a new floor has been put into service. This build-up of urease activity will continue until a certain maximum level. Fresh faeces also contain urease activity (Dai & Karring, 2015, PLoS ONE 9(11): e110402). However, the measured urease activity on a, e.g., regularly soiled slatted floor is much higher than urease activity of fresh faeces.

In the present disclosure, the oxidizing biocide is applied to deactivate the urease producing biofilm, thereby removing the main source of the urease activity. Oxidizing biocides hardly produce any harmful effects (e.g. unwanted gases) inside the livestock house, and were found to be much more effective than other biocides. Thus, oxidizing biocides that are not considered as a pollutant for manure and/or the environment are preferred. For example, it is not preferred to use chlorine. The present inventors found that in particular peracetic acid (also known as peroxyacetic acid or PAA) and electrolyzed oxidizing water (EOW) have a high potential to be used as the oxidizing biocide.

In a study, these products demonstrated their capacity to reduce urease activity on different types of floor during a relatively long period of time (at least 2 days or even at least 3, 4, or 5 days). At shorter time intervals the floor should preferably be carefully cleaned from urine and faeces, e.g. once every 1-4 hours, preferably once every 1-2 hours. In particular the combination of oxidizing biocide at large time intervals (every 1-4 days, preferably every 1-2 days) and careful cleaning in shorter time intervals will significantly reduce ammonia emission from the livestock housing.

According to the present invention, electrolyzed oxidizing water is used as oxidizing biocide.

Most preferably, the application of the oxidizing biocide can be performed with the same system as with which the cleaning is performed. This could be done with a fixed scraping system or a robotic system. These systems may be developed in such a way that they are able to perform the separate functions of cleaning and disinfecting.

With the present disclosure, the ammonia emission from livestock houses and other animal areas, e.g. for cattle, sheep and pigs, can be significantly reduced, when compared with the prior art. The present disclosure can reduce the urease activity on the (slatted) floor to almost zero, causing a slowdown of the urea conversion to ammonia. The prolonged effect based on this mechanism provides the time that is required to clean up the floor with a scraper or other cleaning system.

Furthermore, by reducing ammonia emission, the formation of secondary fine dust will also be reduced. Secondary fine dust is formed by chemical reactions (i.e. photochemical) in the atmosphere. For this reaction ammonia is essential. Secondary fine dust is responsible for more than 50% of the total fine dust concentration in the Netherlands. By reducing ammonia emission, fine dust concentrations can be reduced which will improve air quality.

Air quality within the livestock house will be improved as well. Ammonia is one of the most important aerial pollutants causing respiratory and other health problems both on livestock and on humans working within the production units.

## Detailed description of the invention

The present disclosure relates to the use of at least one oxidizing biocide that is electrolyzed oxidizing water in livestock housing, in particular for reducing urease activity with the objective of reducing ammonia emission. In other words, the present disclosure is aimed at the prevention of formation or accumulation of ammonia, preferably by reducing urease activity, and typically in an area wherein livestock is housed or in other areas in which animals are kept or held, such as barns or slaughter facilities.

Accordingly, the present disclosure provides for a method for reducing urease activity and/or ammonia emission, the method comprising

- applying at least one oxidizing biocide in a livestock housing, preferably on a surface or floor thereof.

In this context, with the term "oxidizing" is meant that the agent has the ability to oxidize other compounds/substances, *i.e.* to cause them to lose electrons. Preferably, the agent has an oxidation reduction potential of at least 200, 300, 400, 500, 600 or 700 mV (for example by using ORP instrument obtainable from Engineering360). Common oxidizing agents are oxygen, hydrogen peroxide and halogens. In the present disclosure, the at least one oxidizing agent is preferably an oxidizing biocide, *i.e.* a compound or substance that can kill or inhibit harmful bacteria, such as those comprised in a biofilm. In view thereof, the term biocide can be interchanged with the term anti-microbial agent or anti-bacterial agent.

According to the invention the oxidizing biocide is electrolyzed oxidizing water (EOW), preferably in a composition with a pH of 4.0-9.0 (or alternatively between 9.0-13.0, preferably between 10-12), preferably 5.0-8.0, more preferably 6.5-7.5, and/or having oxidation reduction potential of at least 200, 300, 400, 500, 600 or 700 mV (for example by using ORP instrument obtainable from Engineering360), and/or having a Free Available Chlorine (FAC) value of at most 800, 700, 600, 500, or 400, 300, 200 ppm (e.g. measured with Myron L company handheld instrument), wherein the composition preferably comprises HClO (hypochlorous acid), $H_2O_2$, and $O_3$.

An advantage of using electrolyzed oxidizing water is that no chemical residual products enter the livestock housing and/or manure, except for some salts (*i.e.* NaCl).

Electrolyzed oxidizing water (EOW) can be produced by the electrolysis of ordinary tap water containing dissolved salt such as sodium chloride. The electrolysis of such salt solutions produces a solution of hypochlorous acid at the anode and a solution of sodium hydroxide at the cathode.

The electrolysis may be performed in a specially designed reactor which allows for the separation of the cathodic and anodic solutions.

The hypochlorous solution is a weak acid and an oxidizing agent. This "acidic electrolyzed water" can be raised in pH by mixing with the desired amount of hydroxide ion solution from the cathode compartment, yielding a solution of hypochlorous acid (HClO) and sodium hydroxide (NaOH).

A solution with a pH of about 7.3 will contain equal concentrations of hypochlorous acid and hypochlorite ions. Particularly preferred electrolyzed oxidizing water is obtainable from e.g. Aquaox BV, Soest, NL (pH 6.8 - 7.0, oxidation reduction potential (ORP) > 930 mV, Free Available Chlorine (FAC) 500 ppm).

Other known oxidizing biocides that are not used according to the invention include calcium hypochlorite, sodium hypochlorite, stabilized bromine, bromine and chlorine containing tablets, hydrogen peroxide silver, hypobromous acid, and sodium bromide.

In a preferred embodiment, the at least one oxidizing agent according to the present disclosure is applied specifically on a surface or floor in the livestock housing or other animal containing area, preferably a concrete or other raw type of floor or (rough) surface. In livestock houses, for instance, it is on the floor where the biofilm with urease producing bacteria reside. In view thereof, it is particularly envisaged to use the at least one oxidizing biocide for removing the biofilm, preferably the biofilm on the floor in the livestock housing.

In a particularly preferred embodiment, in order to achieve surprisingly consistent low levels of urease activity and thus of ammonia emission, the at least one oxidizing agent is applied in the livestock housing every 1-240 hours, more preferably every 4-120 hours, most preferably every 15-72 hours or every 1-3 days, or every 2-4 days, wherein the use is preferably combined with removing faeces and/or urine from the livestock housing floor, preferably every 5-600 minutes, more preferably every 0.25-5 hours, most preferably every 0.5-2 hours. The at least one oxidizing agent can thus be used for reducing cleaning frequency (e.g. the frequency of applying agents for reducing ammonium accumulation) in the livestock housing while maintaining a low urease activity and a subsequent low ammonia emission. Accordingly, the present disclosure also provides for a device (or robot) comprising a (manure) scraper (for example having a width of at least 50 cm thus being able to scrape lanes of at least 50 cm width in the livestock housing), a reservoir containing at least one oxidizing agent and an applicator (such as a sprayer) for applying (*i.e.* spraying) the at least one oxidizing agent, wherein the at least one oxidizing agent according to the invention is an oxidizing biocide which is

Electrolyzed oxidizing water (EOW), preferably in composition with a pH of 5.0-9.0, an oxidation reduction potential of at least 500, or more preferably in composition with a pH of 4.0-9.0 (or alternatively between 9.0-13.0, preferably between 10-12), preferably 5.0-8.0, more preferably 6.5-7.5, and/or having oxidation reduction potential of at least 200, 300, 400, 500, 600 or 700 mV (for example by using ORP instrument obtainable from Engineering360), and/or having a Free Available Chlorine (FAC) value of at most 800, 700, 600, 500, or 400, 300, 200 ppm (e.g. measured with Myron L company handheld instrument), wherein the composition preferably comprises HClO, $H_2O_2$, and $O_3$.

Also provided is a livestock housing having a (concrete) floor, wherein the floor is in combination with the at least one oxidizing agent that is an oxidizing biocide which is electrolyzed oxidizing water (EOW) in composition with a pH of 5.0-9.0, and an oxidation reduction potential of at least 500 mV.

Preferably the oxidizing agent or biocide is present as a solution in an amount of at least 1, 10, or at least 100 ml/m$^2$.

## Brief description of the figures

Figure 1 shows the results of the measured urease activity (mg $NH_4$-N / 30 min) in a standard slatted floor for water (1st col); HCl (2nd col.); formalin (3rd col.); peracetic acid (4th col.); EOW (5th col.).

Figure 2 shows the urease activity (mg $NH_4$-N / 30 min) over time on a grooved floor in the treatments water (upper line), peracetic acid (bottom line) and electrolysed oxidizing water (middle line).

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

The following Example illustrates the different embodiments of the invention.

## Example

### *Materials and methods*

The following agents have been tested (wherein only electrolyzed oxidizing water (EOW) is used according to the invention):

- *Hydrochloric acid solution (HCl)* at a concentration of 0.010 M. The pH is preferably greater than or equal to 2, because otherwise the concrete could be affected. This means that the hydrochloric acid concentration preferably should not exceed 0.01 M.
- *Formaldehyde solution* at a concentration of 4.0 g/L (0.4% w/w, diluted from the product Kusuri Formalin 30%, Devon, UK, composition: 30% Formaldehyde, 8% methanol, 62% water). The same concentration was used in the research by Ogink and Kroodsma (1996, Journal of agricultural engineering research 63(3), 197-204). In the aforementioned study, the effect of this treatment on the urease activity was not determined, only the overall effect on the ammonia emission. Here, the grid floor was sprayed every 2 hours with the formaldehyde solution. In total, in the research of Ogink and Kroodsma (1996), 72 g of formaldehyde and 20 L of water per cow per day was applied.
- *Peracetic acid ($C_2H_4O_3$) solution* (1% w/w). A 1% solution of peracetic acid has a pH of 3.1 (Product name Divosan Activ, JohnsonDiversey, Utrecht). Divosan Activ is normally applied in the food industry for disinfecting surfaces that come into contact with food and beverages. The prescribed concentration depends on the time, temperature and nature of the microorganisms to be killed. Although Divosan Activ already has a very high activity at low temperatures (5-20 °C), the disinfection time is considerably shortened by applying it at temperatures up to 40 °C.
- *Electrolysed water* (EOW, electrolyzed oxidizing water, pH 6.8 - 7.0, oxidation reduction potential (ORP)> 930, FAC 500 ppm, Aquaox BV, Soest). A NaCl solution is electrolyzed, resulting in different disinfecting components, such as hypochlorous acid (HClO), hydrogen peroxide ($H_2O_2$) and ozone (Os). An advantage of this system of decontamination is that no chemical residual products enter the manure, except for some salt (NaCl).
- *Water* (control).

The study was conducted on 3 different floors (in three different barns respectively). The different agents were tested on 4 different locations in the same barn and on the same day. These measurements were performed on different floors in 2 days: standard concrete slatted floor, concrete grooved floor with a top layer of troweled concrete for maximum grip, and standard concrete slatted floor with a rubber top layer (rubber coating).

This means that a total of $5 \times 4 \times 3 \times 2 = 120$ measurements of the urease activity have been performed, including the control measurements without the use of an agent. The measurements were started 30 minutes after applying the liquid. For a description of the measurement of the urease activity, see herein below. The following actions have been performed in sequence for the urease activity determination, starting at location 1:

- The treatments were randomly assigned to a site within the location. The treatments were applied at a sufficient distance from each other so that they did not influence each other.
- The treatment site was cleaned with a hand scraper with a hard strip, then with a hand scraper with rubber strip and finally with a wet brush; this to simulate the (faeces and urine) removing and cleaning effect of a scraping or robotic systems.
- The surface to be measured was sprayed with the agent. The spraying was done with a plant spray, one for each treatment fluid. An excess of liquid was sprayed (about 25 ml). In this way, the surface was completely wetted with the treatment fluid. The weight of the plant spray before and after spraying was determined and noted.
- The liquid was allowed to work on the floor for 30 minutes. Then the spots (12 cm x 30 cm) were cleaned with the hand scraper with rubber strip.
- The concrete ring with rubber seal was placed and filled with 55 ml of urea solution (10 g urea-N / L) and this was mixed lightly.
- Immediately afterwards, a 5 ml sample was taken with a pipette at t = 0 and this was added to a tube with 1 ml solution of 1 M hydrochloric acid to stop the urease activity and thus the conversion of urea to ammonium. The cylinder was then covered with a plastic lid.
- At t = 30 min, after mixing, a second sample of 5 ml was taken and this was also added to a tube with 1 ml solution of 1 M hydrochloric acid to stop the urease activity and thus the conversion of urea to ammonium.
- The samples were stored at 4 °C until analysis of the ammonium-N content using spectrophotometry.

The two most promising agents, *i.e.* peracetic acid and EOW, were subsequently examined over time. The question was how long the effect of these agents would last. This determines how frequently these agents have to be applied in time to achieve a consistently low urease activity on the floor. These agents have been tested on one slatted floor type, namely on the concrete floor with a top layer of troweled concrete for maximum grip (grooved floor). At three different locations in the barn, the effect of both antibacterial agents on the urease activity was monitored over time and compared with treatment with water alone. The following actions have been performed in order:

- Three locations were selected in the barn where the measurements were taken.
- Within these locations 3 sites were selected for applying the treatments. The sites have the width of one grid beam (~12 cm) and a length of approx. 30 cm. The treatments water, peracetic acid and EOW were randomly assigned to one of these sites.
- The entire site was cleaned with a hand scraper with a hard strip, then with a hand scraper with rubber strip and finally with a clean wet brush.
- The baseline situation (t-1) has been established by measuring the urease activity according to the procedure described herein below.
- The sites have been amply sprayed with the assigned liquids (about 60 ml).
- The liquid was allowed to work on the floor for 30 minutes. Then the sites were cleaned with the hand scraper with rubber strip.
- The start situation (t0) was determined by measuring the urease activity according to the procedure described herein below. t0 is the moment of the start of urease measurement.
- The urease activity was then measured at time t1 (about 2 hours after t0), t2 (about 4 hours after t0), t3 (about 7 hours after t0), t4 (about 24 hours after t0), t5 (about 48 hours after t0). This means $3 \times 3 \times 7 = 63$ measurements of urease activity.
- The consecutive urease measurements were distributed over the surface; the length of 30 cm was divided into 3 pieces and 2 measurements were taken on each piece and the measurement t-1 was done on the middle of these 3 pieces. So as follows: t-1: middle; t0: left; t1: right; t2: middle; t3: left; t4: right; t5: middle.
- In between these urease measurements cows were allowed to move freely around, meaning new faeces and urine. Before the urease measurements were performed at times t1 to t5, the site was cleaned according to the procedure that was also used for time t-1, i.e.: Cleaning the spots with a hand scraper with a hard strip, then with a hand scraper with rubber strip and finally with a clean wet brush.
- Care was taken to ensure that a clean brush and clean water were used so that no urease activity could arise from there. It was also ensured that the inside of the rings were well cleaned (with peracetic acid, then rinsed with clean water).

### Data analysis

Averages and standard errors (s.e.) were calculated and displayed in graphs. The effects of the different floor types and treatments were determined with the procedure 'General Analysis of Variance' from Genstat (Genstat Committee, 2015, Genstat Release 18.1 VSN International Ltd, Hemel Hempstead, UK). The following nested model has been used:

$$LN(Y_{ijk}) = Floor_i + Floor_i \cdot Treatment_j + e_{ijk}$$

Wherein: LN ($Y_{ijk}$) is the urease activity (mg $NH_4$-N / (L 30 min)); $Floor_i$ is floor type (i = standard grid, troweled concrete top layer, rubber coating); Treatment is the agent (j = water, hydrochloric acid, formaldehyde, peracetic acid, electrolysed water); $e_{ijk}$ is the residual error.

### Measurement of urease activity

Measurement of urease activity was performed as described by Braam et al., 1997 J. agric. Engineering Res. 68: 375-386; Braam & Swierstra, 1999, J. Agric Engineering Res. 72: 59-69.

First, the floor surface was cleaned by hand with a hand scraper with a rubber strip. Immediately afterwards, a small cylinder (inside diameter 80 and 60 mm deep) was placed on the sample. Since the cylinder was open at both top and bottom, it had to be kept in contact with the surface of the sample to prevent leakage of the solution that was later poured into the cylinder. Therefore, the cylinder was cast in a ring-shaped concrete element, 9 kg in weight and provided with a rubber ring. Then, 55 ml of a urea solution (10 g urea-N/L) was poured into the cylinder and stirred. The solution, and thus also the urea, was in direct contact with the urease-active surface of the sample, enabling degradation of urea to ammonium. A 5 ml sample was taken at t = 0 s and 1 ml solution of 1 M hydrochloric acid was added. The acid stopped bacterial activity that was present in the 5 ml sample, thus preventing further degradation of urea in the sample. Moreover, eventual release of ammonia from the sample was prevented. The remaining 50 ml of urea solution in the cylinder was separated from the outside air by covering the cylinder with a plastic cap. After half an hour the solution was stirred and again a 5 ml sample was taken and treated as the sample taken at t = 0 s. Ammoniacal nitrogen ($NH_4$-N + $NH_3$-N) in both samples was measured using a spectrophotometer. The measurement was based on the absorption of 655 nm wavelength light, directed through a sample in a glass tube. Absorption was compared with an absorption curve obtained from results of spectrophotometer tests on samples with known ammoniacal nitrogen content. The curve was calibrated each time a batch of samples was analysed. The result of the sample taken at t = 0 s was used to correct for the ammoniacal nitrogen present on the surface before the measurements started. Urease activity was expressed as the increase of ammoniacal nitrogen content in the solution poured into the cylinder and expressed in mg ($NH_4$ -N)/L.

*Results*

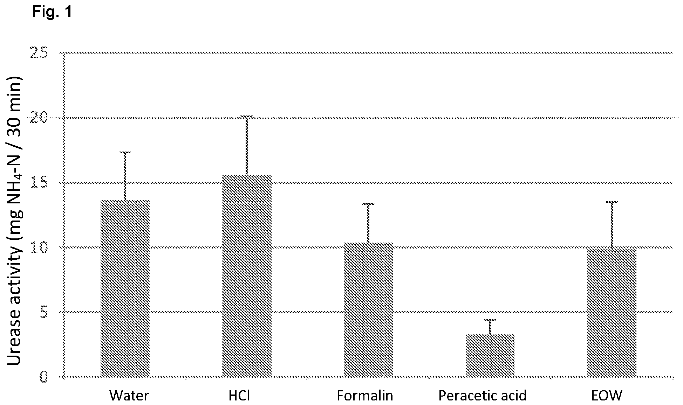

Figure 1 shows the results of the measured urease activity in the standard slatted floor for the different agent treatments. As can be seen, the urease activity after the peracetic acid treatment (not according to the invention) was significantly lower than in all other treatments (P <0.001). Further, treatment with EOW gave better results than treatment with formalin.

Further, a significant effect of floor type on the urease activity was found (P <0.001). The standard slatted floor had an average urease activity for the different treatments of 10.6, the slatted floor with troweled concrete top layer (grooved floor) had an average urease activity for the different treatments of 78.5 and the standard concrete slatted floor with a rubber top layer had a urease activity for the different treatments of 2.5 mg ($NH_4$-N / L 30 min). The urease activity of the grooved floor was significantly higher than that of the standard slatted floor and was significantly higher than the floor with rubber top layer (P <0.001). In view thereof, urease activity can be dramatically reduced further by opting for a rubber top layer. The differences between the different floor types can be explained mainly by the roughness of the floor. That roughness of the floor is an important factor determining the urease activity has previously been demonstrated by Braam & Swierstra (1999, J. Agric Engineering Res. 72: 59-69). The grooved floor had a very rough surface. This rough surface has been deliberately created to ensure good walkability of the dairy cows. The standard slatted floor was relatively smooth. The rubber top layer floor also has a very smooth surface. The walkability of this floor is guaranteed by the fact that the floor is compressible.

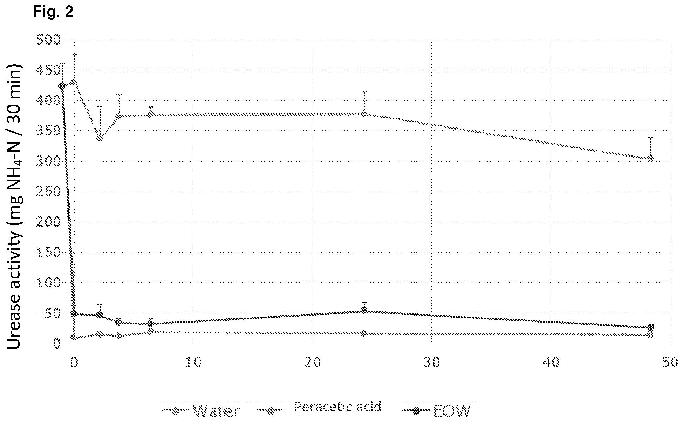

Figure 2 shows the urease activity over time on the grooved floor in the treatments water (upper line), peracetic acid (bottom line) and electrolysed water (middle line). This figure shows that despite the thorough cleaning with scraper and brush the urease activity (at t-1) was high (an average of 423 mg $NH_4$-N / (L 30 min)). By treatment with water alone, urease activity decreased slightly (430 and 337 mg $NH_4$-N / (L 30 min)) at t0 and t1 respectively). Thereafter, the urease activity of this control treatment remained reasonably stable. By treatment with peracetic acid and EOW the urease activity dropped very strongly, to 9.9 and 49.5 mg $NH_4$-N / (L 30 min) at t0, respectively. Thereafter, the urease activity for these treatments remained reasonably stable at this low level; for peracetic acid varying between a minimum of 13.0 and a maximum of 19.4 mg $NH_4$-N / (L 30 min) and for EOW varying between a minimum of 26.2 and a maximum of 46.7 mg $NH_4$-N / (L 30 min). At times t0 to t5 the urease activity of the peracetic acid and EOW treatments was significantly lower than the treatment with water (P <0.001). The urease activity after the peracetic acid treatment was lower at all times than after the EOW treatment (P <0.05), only for time t3 this difference was a tendency (P <0.10).

Surprisingly, in a positive sense, is the finding that the effects of peracetic acid and EOW have a long-term effect. After 48 hours we could not yet detect a reduction in the effect.

On the basis of the current results it can be established that the treatment at least does not have to be performed more than 1× per 2 days.

**Claims**

1.  Use of at least one oxidizing biocide for reducing urease activity and/or ammonia emission in an area where animals are maintained, wherein the at least one oxidizing biocide is electrolyzed oxidizing water (EOW), and wherein the use of the biocide is combined with removing faeces and/or urine from a floor in an area where animals are maintained.

2.  Use of at least one oxidizing biocide according to claim 1, wherein the EOW has a pH of 5.0-9.0 and an oxidation reduction potential of at least 500 mV.

3.  Use of at least one oxidizing biocide according to any one of the previous claims, wherein the at least one oxidizing biocide is applied on a floor or surface in the area where animals are maintained.

4.  Use of at least one oxidizing biocide according to any one of the previous claims, wherein the use is further for removing a biofilm on a floor or surface in the area where animals are maintained.

5. Use of at least one oxidizing biocide according to any one of the previous claims, wherein the use is further for reducing cleaning frequency in the area where animals are maintained.

6. Use of at least one oxidizing biocide according to any one of the previous claims, wherein the animals are chosen from the group consisting of cattle, goats, sheep and pigs.

7. Use of at least one oxidizing biocide according to any one of the previous claims, wherein the at least one oxidizing biocide is applied in the area where animals are maintained every 1-240 hours, wherein the use is combined with removing feaces and/or urine from a floor in the area where animals are maintained, preferably every 5-600 minutes.

8. Method for reducing urease activity and/or ammonia emission, the method comprising applying at least one oxidizing biocide in an area where animals are maintained, preferably on a floor thereof, wherein the at least one oxidizing biocide is electrolyzed oxidizing water (EOVη, and
removing feaces and/or urine from a floor in the area where animals are maintained, preferably every 5-600 minutes.

9. Method according to claim 8, wherein the at least one oxidizing biocide is electrolyzed oxidizing water (EOW), preferably in composition with a pH of 5.0-9.0, an oxidation reduction potential of at least 500 mV.

10. Method according to any one of claims 8-9, wherein the animals are chosen from the group consisting of cattle, sheep, goats and pigs.

11. Method according to any one of claims 8-10, wherein the at least one oxidizing biocide is applied in the area where animals are maintained every 1-240 hours, and removing feaces and/or urine from a floor in the area where animals are maintained is performed every 0.25-5 hours.

12. Device comprising a manure scraper, a reservoir containing at least one oxidizing biocide, and an applicator for applying the at least one oxidizing biocide, wherein the at least one oxidizing biocide is electrolyzed oxidizing water (EOVη, preferably in composition with a pH of 5.0-9.0, an oxidation reduction potential of at least 500 mV.

13. Use of an area where animals are maintained having a floor, preferably a livestock housing,

wherein the floor is in combination with at least one oxidizing biocide, for reducing urease activity and/or ammonia emission,
wherein the at least one oxidizing biocide is electrolyzed oxidizing water (EOW) in composition with a pH of 5.0-9.0, and an oxidation reduction potential of at least 500 mV.

14. Use of an area where animals are maintained according to claim 13, wherein the livestock is chosen from the group consisting of cattle, sheep, goats and pigs.

**Patentansprüche**

1. Verwendung mindestens eines oxidierenden Biozids zur Verringerung der Ureaseaktivität und/oder der Ammoniakemission in einem Bereich, in dem Tiere gehalten werden, wobei das mindestens eine oxidierende Biozid elektrolysiertes oxidierendes Wasser (EOW) ist, und wobei die Verwendung des Biozids mit dem Entfernen von Fäkalien und/oder Urin von einem Boden in einem Bereich, in dem Tiere gehalten werden, kombiniert wird.

2. Verwendung mindestens eines oxidierenden Biozids gemäß Anspruch 1, wobei das EOW einen pH-Wert von 5,0-9,0 und ein Oxidations-Reduktions-Potential von mindestens 500 mV aufweist.

3. Verwendung mindestens eines oxidierenden Biozids gemäß einem der vorhergehenden Ansprüche, wobei das mindestens eine oxidierende Biozid auf einen Boden oder eine Oberfläche in dem Bereich, in dem Tiere gehalten werden, aufgebracht wird.

4. Verwendung mindestens eines oxidierenden Biozids gemäß einem der vorhergehenden Ansprüche, wobei die Verwendung ferner zum Entfernen eines Biofilms auf einem Boden oder einer Oberfläche in dem Bereich, in dem Tiere gehalten werden, dient.

5. Verwendung mindestens eines oxidierenden Biozids gemäß einem der vorhergehenden Ansprüche, wobei die Verwendung ferner zur Reduzierung der Reinigungshäufigkeit in dem Bereich, in dem Tiere gehalten werden dient.

6. Verwendung mindestens eines oxidierenden Biozids gemäß einem der vorhergehenden Ansprüche, wobei die Tiere aus der Gruppe ausgewählt sind, die aus Rindern, Ziegen, Schafen und Schweinen besteht.

7. Verwendung mindestens eines oxidierenden Biozids gemäß einem der vorhergehenden Ansprüche, wobei das mindestens eine oxidierende Biozid in dem Bereich, in dem Tiere gehalten werden, alle 1-240 Stunden aufgebracht wird, wobei die Verwendung mit dem Entfernen von Fäkalien und/oder Urin von einem Boden in dem Bereich, in dem Tiere gehalten werden, kombiniert wird, vorzugsweise alle 5-600 Minuten.

8. Verfahren zur Verringerung der Ureaseaktivität und/oder der Ammoniakemission, wobei das Verfahren das Aufbringen mindestens eines oxidierenden Biozids in einem Bereich, in dem Tiere gehalten werden, vorzugsweise auf einem Boden davon, wobei das mindestens eine oxidierende Biozid elektrolysiertes oxidierendes Wasser (EOW) ist, und das Entfernen von Fäkalien und/oder Urin von einem Boden in dem Bereich, in dem Tiere gehalten werden, umfasst.

9. Verfahren nach Anspruch 8, wobei das mindestens eine oxidierende Biozid elektrolysiertes oxidierendes Wasser (EOW) ist, vorzugsweise in einer Zusammensetzung mit einem pH-Wert von 5,0-9,0, einem Oxidations-Reduktions-Potential von mindestens 500 mV.

10. Verfahren nach einem der Ansprüche 8-9, wobei die Tiere aus der Gruppe ausgewählt sind, die aus Rindern, Ziegen, Schafen und Schweinen besteht.

11. Verfahren nach einem der Ansprüche 8-10, wobei das mindestens eine oxidierende Biozid in dem Bereich, in dem Tiere gehalten werden, alle 1-240 Stunden aufgebracht wird, und das Entfernen von Fäkalien und/oder Urin von einem Boden in dem Bereich, in dem Tiere gehalten werden, alle 0,25-5 Stunden durchgeführt wird.

12. Vorrichtung umfassend einen Dungschieber, einen Vorratsbehälter, der mindestens ein oxidierendes Biozid enthält, und einen Applikator zum Auftragen des mindestens einen oxidierenden Biozids, wobei das mindestens eine oxidierende Biozid elektrolysiertes oxidierendes Wasser (EOW) ist, vorzugsweise in einer Zusammensetzung mit einem pH-Wert von 5,0-9,0, einem Oxidations-Reduktions-Potential von mindestens 500 mV.

13. Verwendung eines Bereichs, in dem Tiere gehalten werden, mit einem Boden, vorzugsweise ein Nutztierstall, wobei der Boden in Kombination mit mindestens einem oxidierenden Biozid ist, zur Verringerung der Ureaseaktivität und/oder der Ammoniakemission, wobei das mindestens eine oxidierende Biozid elektrolysiertes oxidierendes Wasser (EOW) in einer Zusammensetzung mit einem pH-Wert von 5,0-9,0 und einem Oxidations-Reduktions-Potential von mindestens 500 mV ist.

14. Verwendung eines Bereichs, in dem Tiere gehalten werden, nach Anspruch 13, wobei die Nutztiere aus der Gruppe ausgewählt sind, die aus Rindern, Schafen, Ziegen und Schweinen besteht.

**Revendications**

1. Utilisation d'au moins un biocide oxydant pour réduire une activité d'uréase et/ou une émission d'ammoniac dans une zone où des animaux sont gardés, dans laquelle au moins un biocide oxydant est de l'eau oxydante électrolysée (EOW), et dans lequel l'utilisation du biocide est combinée avec l'élimination de fèces et/ou d'urine d'un sol dans une zone où des animaux sont gardés.

2. Utilisation d'au moins un biocide oxydant selon la revendication 1, dans laquelle l'EOW a un pH compris entre 5,0 et 9,0 et un potentiel d'oxydo-réduction d'au moins 500 mV.

3. Utilisation d'au moins un biocide oxydant selon l'une quelconque des revendications précédentes, dans laquelle l'au moins un biocide oxydant est appliqué sur un sol ou une surface dans la zone où les animaux sont gardés.

**4.** Utilisation d'au moins un biocide oxydant selon l'une quelconque des revendications précédentes, l'utilisation étant en outre destinée à éliminer un biofilm d'un sol ou une surface dans la zone où les animaux sont gardés.

**5.** Utilisation d'au moins un biocide oxydant selon l'une quelconque des revendications précédentes, l'utilisation étant en outre destinée à réduire la fréquence de nettoyage dans la zone où les animaux sont gardés.

**6.** Utilisation d'au moins un biocide oxydant selon l'une quelconque des revendications précédentes, dans laquelle les animaux sont choisis dans le groupe constitué par les bovins, les caprins, les ovins et les porcins.

**7.** Utilisation d'au moins un biocide oxydant selon l'une quelconque des revendications précédentes, dans laquelle l'au moins un biocide oxydant est appliqué dans la zone où les animaux sont gardés toutes les 1 à 240 heures, l'utilisation étant combinée à l'enlèvement de fèces et/ou d'urine d'un sol dans la zone où les animaux sont gardés, de préférence toutes les 1 à 2 heures.
d'un sol de la zone d'élevage, de préférence toutes les 5 à 600 minutes.

**8.** Méthode de réduction d'une activité d'uréase et/ou d'émission d'ammoniac, la méthode comprenant une étape d'appliquer au moins un biocide oxydant dans une zone où des animaux sont gardés, de préférence sur un plancher de celle-ci, dans laquelle l'au moins un biocide oxydant est de l'eau oxydante électrolysée (EOW), et une étape d'éliminer des fèces et/ou de l'urine d'un sol de la zone où les animaux sont gardés, de préférence toutes les 5 à 600 minutes.

**9.** Méthode selon la revendication 8, dans laquelle l'au moins un biocide oxydant est de l'eau oxydante électrolysée (EOW), de préférence en composition avec un pH compris entre 5,0 et 9,0, un potentiel d'oxydo-réduction d'au moins 500 mV.

**10.** Méthode selon l'une quelconque des revendications 8 à 9, dans laquelle les animaux sont choisis dans le groupe constitué par les bovins, les ovins, les caprins et les porcins.

**11.** Méthode selon l'une quelconque des revendications 8 à 10, dans laquelle l'au moins un biocide oxydant est appliqué dans la zone où les animaux sont gardés toutes les 1 à 240 heures, et l'élimination de fèces et/ou d'urine d'un sol dans la zone où les animaux sont gardés est effectuée toutes les 0,25 à 5 heures.

**12.** Dispositif comprenant un racleur de fumier, un réservoir contenant au moins un biocide oxydant, et un applicateur pour appliquer l'au moins un biocide oxydant, dans lequel l'au moins un biocide oxydant est de l'eau oxydante électrolysée (EOW), de préférence en composition avec un pH compris entre 5,0 et 9,0, un potentiel d'oxydo-réduction d'au moins 500 mV.

**13.** Utilisation d'une zone où des animaux sont gardés et qui comporte un sol, de préférence un bâtiment d'élevage d'animaux, dans lequel le sol est en combinaison avec au moins un biocide oxydant, pour réduire une activité d'uréase et/ou une émission d'ammoniac,
dans lequel au moins un biocide oxydant est de l'eau oxydante électrolysée (EOW) en composition avec un pH compris entre 5,0 et 9,0, et un potentiel d'oxydoréduction d'au moins 500 mV.

**14.** Utilisation d'une zone où des animaux sont gardés selon la revendication 13, dans laquelle le bétail est choisi dans le groupe constitué par les bovins, les ovins, les caprins et les porcins.

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0408199 A

**Non-patent literature cited in the description**

- **CANH et al.** *J. Anim. Sci.,* 1997, vol. 75, 700-706
- **DIJKSTRA et al.** *Animal,* 2013, vol. 7 (s2), 292-302
- **ELZING ; SWIERSTRA.** *Rapport 93-2 IMAG-DLO, Wageningen,* 1993
- **BRAAM ; SWIERSTRA.** *J. Agric. Engng Res,* 1999, vol. 72, 59-69
- **SNOEK.** PhD thesis. Wageningen University, 2016, 182
- **PARKER et al.** *Applied Engineering in Agriculture,* 01 December 2016, 823-832
- **KRAJEWSKA et al.** JOURNAL OF MOLECULAR CATALYSIS. B, ENZYMATIC. ELSEVIER, 01 March 2011, vol. 68
- **HAO et al.** *Journal of Applied Microbiology,* 27 June 2013, vol. 115
- **HAGENKAMP-KORTH, OHL ; HARTUNG.** *Biomass and Energy,* 2015, vol. 75, 75-82
- **HAGENKAMP-KORTH ; HAEUSSERMANN ; HARTUNG.** *Agriculture, Ecosystems and Environment,* 2015, vol. 202, 168-177
- **OGINK ; KROODSMA.** *Journal of agricultural engineering research,* 1996, vol. 63 (3), 197-2014
- **DAI ; KARRING.** *PLoS ONE,* 2015, vol. 9 (11), e110402
- **OGINK ; KROODSMA.** *Journal of agricultural engineering research,* 1996, vol. 63 (3), 197-204
- **BRAAM et al.** *J. agric. Engineering Res.,* 1997, vol. 68, 375-386
- **BRAAM ; SWIERSTRA.** *J. Agric Engineering Res.,* 1999, vol. 72, 59-69